# EUROPEAN PATENT SPECIFICATION

(11) **EP 3 300 932 B1**
(45) Date of publication and mention of the grant of the patent: **01.05.2019**
(21) Application number: 17194265.9
(22) Date of filing: 29.09.2017
(51) Int. Cl.: B60D 1/06

(54) **CLAMP DEVICE FOR HITCH BALL**
KLEMMVORRICHTUNG FÜR ANHÄNGEKUPPLUNGSKUGEL
DISPOSITIF DE SERRAGE POUR BOULE D'ATTELAGE

(30) Priority: 30.09.2016 TW 105131540
(43) Date of publication of application: 04.04.2018
(73) Proprietor: King Rack Industrial Co., Ltd., Taichung City (TW)
(72) Inventor: WANG, Chiu-Kuei, Taichung City (TW); ESPESSET, Hugues Sylvain, Taichung City (TW)
(74) Representative: Cabinet Chaillot

(56) References cited:
- AU-A1- 2009 238 309
- FR-A- 1 441 648

## Description

### BACKGROUND OF THE INVENTION

### 1. Fields of the invention

The present invention relates to a clamp device for a hitch ball, and more particularly, to a clamp device with only three clamp plates and easily operated.

### 2. Descriptions of Related Art

The conventional clamp device for a hitch ball known to applicant is disclosed in TWI339168, AU2009238309, PL219708 and AR072653, wherein there are four clamp plates which are able to be pulled upward by using an axial control unit to clamp the hitch ball. There is a radial control unit which is operated to create a clamp force in radial direction. When both of the axial and radial pulling forces are released, the resilient member in the axial control unit creates a reaction force to force the pulling rod to disengage from the engaging portion. However, the four clamp plates are worn out after a period of time of use, and the gap between the clamp plates and the hitch ball increases. Therefore, the connection between the clamp plates and the hitch ball is not well secured. The installation of the four clamp plates is complicated. When either one of the clamp plates is not correctly installed, the clamping force to the hitch ball is not sufficient.

The present invention intends to provide a clamp device for a hitch ball, wherein three clamp plates are used, and the fastening and loosening can be made by operating the handle upward and downward.

### SUMMARY OF THE INVENTION

The present invention relates to a clamp device of a hitch ball, and the clamp device comprises a clamp unit having three clamp plates located around the hitch ball. Each clamp plate has a pivotal portion on the upper end thereof. The three clamp plates are pivotably connected to a seat which has an aperture. A mask is mounted to outside of the clamp unit and has a cover on the top thereof. The mask has a connection portion on outside thereof. A receiver tube is connected to the connection portion.

A control unit is connected to the cover and has a handle, a contact unit and a board. The contact unit includes two panels which are connected to the handle so as to press or release the board. The board is located on the top of the cover of the mask. A bolt extends through the seat and the board, and is secured to the seat. The clamp unit moves upward to clamp the hitch ball or moves downward to release the hitch ball by operating the control unit.

Preferably, the bolt is connected to a knob which is rested on the base. The base is connected between the two panels of the contact unit. The clamp unit is adjusted by rotating the knob.

Preferably, the cover includes two support plates, and each support plate includes a pivotal hole. The contact unit is connected to the cover by extending a pin through the pivotal holes.

Preferably, the panels each have a protruded portion which presses the board.

Preferably, the aperture of the seat includes an inclined inside relative to a top of the seat.

Preferably, a restriction plate is mounted to the seat.

The advantages of the present invention are that the clamp unit is controlled by the control unit to clamp the hitch ball which is directly clamped by the clamp unit so that the clamping force is sufficient. The gaps between the clamp plates need not to be concerned when manufacturing the clamp unit.

The clamp plates each have a pivotal portion so that the clamp plates are pivotable relative to the seat. The seat further has a restriction plate so as to prevent the clamp plates from dropping when the clamp plates are loosened.

The clamp plates are connected to the seat, and the bolt extends through the seat and is connected to a knob. The installation is simple when compared with the conventional clamp device.

The knob is located on a base which is located between the panels of the contact unit. The bolt is adjusted by rotating the knob to adjust the position of the seat.

The handle has a protruded portion on the front end thereof which pushes the board downward to loosen the clamp unit when operating the handle. The aperture of the seat has an inclined inside so that the bolt moves toward the inclined inside when the handle is pivoted upward. When the handle is pivoted downward to lock the hitch ball, the bolt moves to its initial position.

The present invention will become more apparent from the following description when taken in connection with the accompanying drawings which show, for purposes of illustration only, a preferred embodiment in accordance with the present invention.

### BRIEF DESCRIPTION OF THE DRAWINGS

Fig. 1 shows two perspective views of the clamp device of the present invention and the hitch ball;
Fig. 2 is an exploded view of the clamp device of the present invention and the hitch ball;
Fig. 3 is a perspective view to show the clamp device of the present invention;
Fig. 4 is a cross sectional view to show that the clamp device of the present invention is about to clamp the hitch ball;
Fig. 5 is a cross sectional view to show that the clamp device of the present invention clamps the hitch ball;
Fig. 6 is a cross sectional view to show that the clamp device of the present invention releases the hitch ball;
Fig. 7 is a cross sectional view to show that the clamp device of the present invention is separated from the hitch ball, and
Fig. 8 is a cross sectional view to show that no hitch ball is located in the clamp device of the present invention.

### DETAILED DESCRIPTION OF THE PREFERRED EMBODIMENT

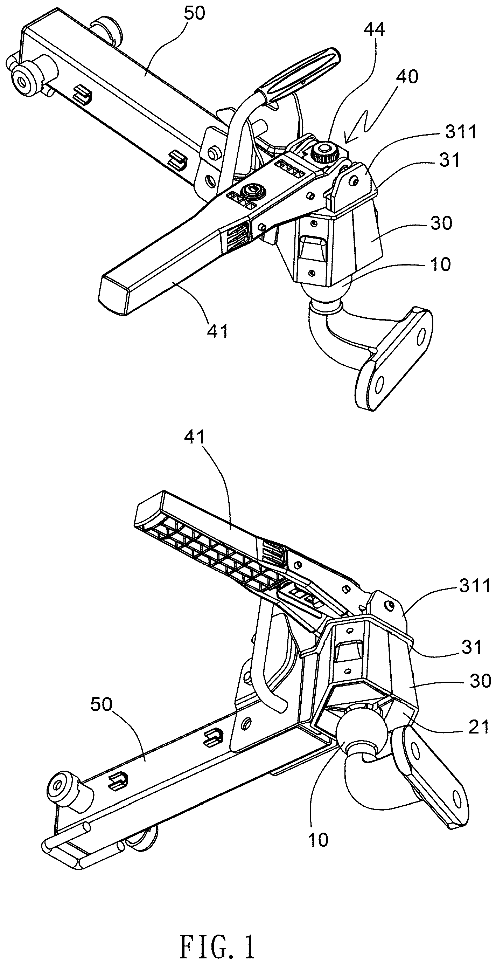

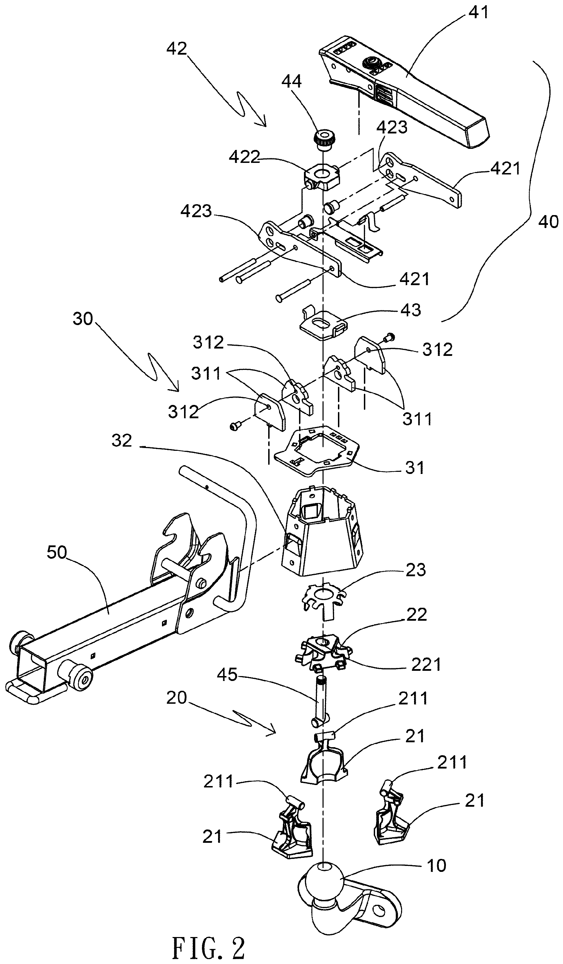

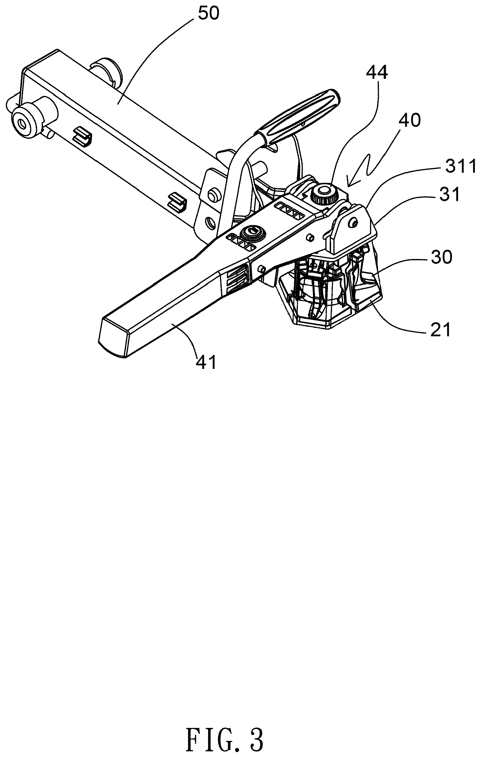

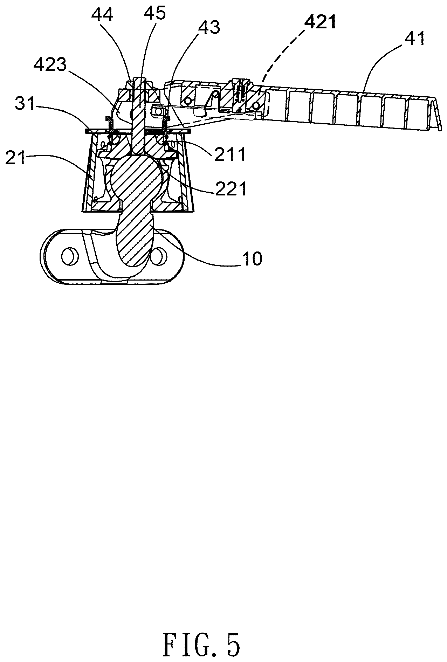

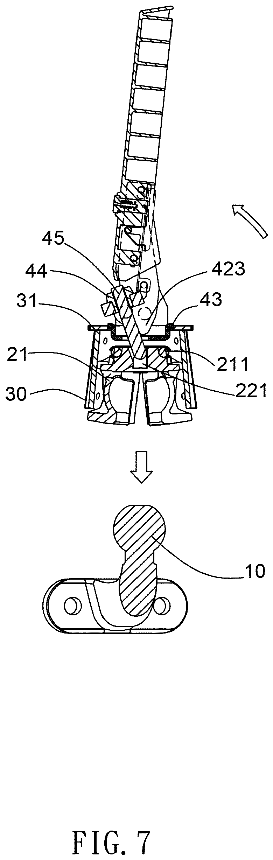

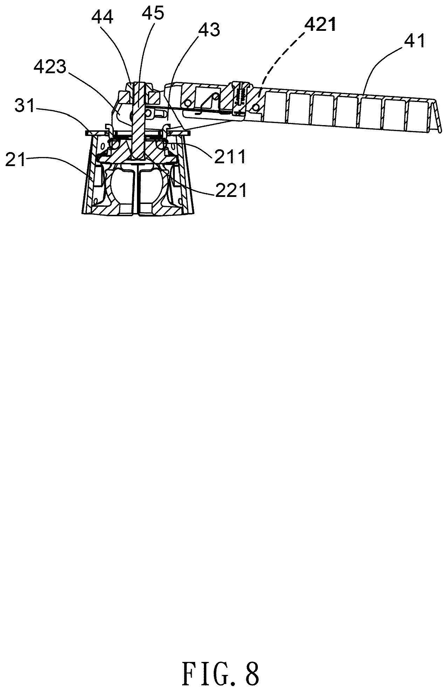

Referring to Figs. 1 to 8, the clamp device of the present invention comprises a clamp unit 20 having three clamp plates 21 located around the hitch ball 10. Each clamp plate 21 has a pivotal portion 211 on the upper end thereof. The three clamp plates 21 are pivotably connected to a seat 22 which has an aperture 221. A restriction plate 23 is mounted to the seat 22. A mask 30 is mounted to outside of the clamp unit 20 and has a cover 31 on the top thereof. The mask 30 has a connection portion 32 on outside thereof. A receiver tube 50 is connected to the connection portion 32. The receiver tube 50 can be connected with a bicycle carry rack, a luggage tray, a storage box, a placement shelf and the like.

A control unit 40 is connected to the cover 31 and has a handle 41, a contact unit 42 and a board 43. The contact unit 42 includes two panels 421 which are connected on two insides of the handle 41, and the panels 421 each have a protruded portion 423 which protrudes beyond the front opening of the handle 41 so as to press or release the board 43. The board 43 is located on the top of the cover 31 of the mask 30. A base 422 is located on the board 43 and connected between the two panels 421 of the contact unit 42. The cover 31 includes two pairs of support plates 311, and each support plate 311 includes a pivotal hole 312. The two parts of the support plates 311 are connected to the cover by way of engagement of protrusion-and-recess. The contact unit 42 is connected to the cover 31 by extending a pin through the pivotal holes 312.

A bolt 45 extends from the lower end of the clamp device and through the seat 22 and the board 43, and is secured to the seat 22. A knob 44 is rested on the base 422 and threadedly connected to the bolt 45. The clamp unit 20 is adjusted by rotating the knob 44.

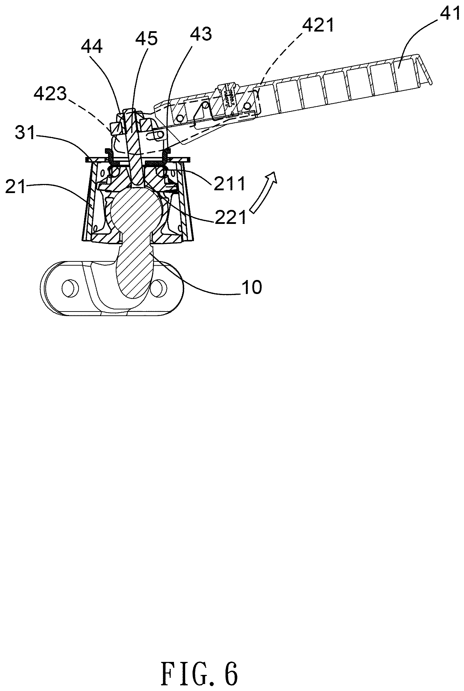

When pivoting the handle 41 upward as shown in Fig. 6, the protruded portions 423 of the two panels 421 press the board 43 so that the seat 22 connected to the board 43 is lowered to release the hitch ball 10.

When clamping the hitch ball 10, the handle 41 pivoted downward, the panels 421 lifts the seat 22 of the clamp unit 20 upward to clamp the hitch ball 10.

The hitch ball 10 is directly clamped by the clamp unit 40 so that the clamping force is sufficient. The gaps between the clamp plates 21 need not to be concerned when manufacturing the clamp unit 40.

The clamp plates 21 each have a pivotal portion 211 so that the clamp plates 21 are pivotable relative to the seat 22. The seat 22 further has the restriction plate 23 so as to prevent the clamp plates 21 from dropping when the clamp plates 21 are loosened.

The knob 44 on the base 422 which is connected between the panels 421. The height of the seat 22 can be adjusted by rotating the knob 44 to move the bolt 45.

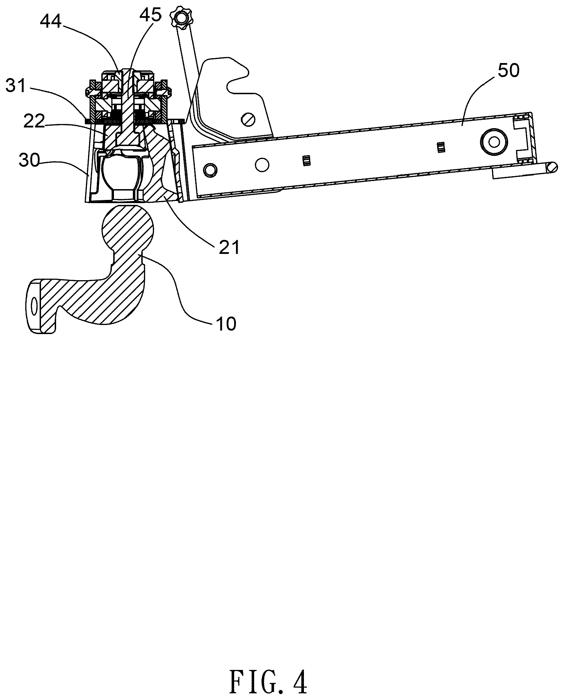

As shown in Figs. 4 to 8, the aperture 221 of the seat 22 includes an inclined inside relative to the top of the seat 22. When pivoting the handle 41 upward, the bolt 45 moves toward the inclined inside, and when locking the hitch ball 10, the bolt 45 returns to its initial position. The panels 421 clamp two sides of the board 43 to lift the seat 22 of the clamp unit 20 to clamp the hitch ball 10.

## Claims

1. A clamp device of a hitch ball (10), comprising:
a clamp unit (20) having three clamp plates (21) located around the hitch ball (10), each clamp plate (21) having a pivotal portion (211) on an upper end thereof, the three clamp plates (21) being pivotably connected to a seat (22) which has an aperture (221);
a mask (30) mounted to an outside of the clamp unit (20) and having a cover (31) located on a top thereof, the mask (30) having a connection portion (32) on an outside thereof, a receiver tube (50) connected to the connection portion (32), and
a control unit (40) connected to the cover (31) and having a handle (41), a contact unit (42) and a board (43), the contact unit (42) including two panels (421) which are connected to the handle (41) so as to press or release the board (43), the board (43) on a top of the cover of the mask (30), a bolt (45) extending through the seat (22) and the board (43), and secured to the seat (22), the clamp unit (20) moving upward to clamp the hitch ball (10) or moving downward to release the hitch ball (10) by operating the control unit (40).

2. The clamp device as claimed in claim 1, wherein the bolt (45) is connected to a knob (44) which is rested on a base (422), the base (422) is connected between the two panels (421) of the contact unit (42), the clamp unit (20) is adjusted by rotating the knob (44).

3. The clamp device as claimed in claim 1, wherein the cover (31) includes two support plates (311), each support plate (311) includes a pivotal hole (312), the contact unit (42) is connected to the cover by extending a pin through the pivotal holes (312), such that the handle (41) is pivotable relative to the cover (31).

4. The clamp device as claimed in claim 1, wherein the panels (421) each have a protruded portion (423) which presses the board (43).

5. The clamp device as claimed in claim 1, wherein the aperture (221) of the seat (22) includes an inclined inside relative to a top of the seat (22).

6. The clamp device as claimed in claim 1, wherein a restriction plate (23) is mounted to the seat (22).

7. The clamp device as claimed in claim 1, wherein a bicycle carry rack is connected with the receiver tube (50).

8. The clamp device as claimed in claim 1, wherein a luggage tray is connected with the receiver tube (50).

9. The clamp device as claimed in claim 1, wherein a storage box is connected with the receiver tube (50).

10. The clamp device as claimed in claim 1, wherein a placement shelf is connected with the receiver tube 50.

## Patentansprüche

1. Klemmvorrichtung für einen Kugelkopf (10), umfassend:
eine Klemmeinheit (20) mit drei Klemmplatten (21), die um den Kugelkopf (10) angeordnet sind, wobei jede Klemmplatte (21) einen Drehabschnitt (211) an einem oberen Ende davon aufweist, und die drei Klemmplatten (21) drehbar mit einem Sitz (22) verbunden sind, der eine Öffnung (221) aufweist;
eine Maske (30), die auf einer Außenseite der Klemmeinheit (20) angebracht ist und eine Abdeckung (31) aufweist, die auf einer Oberseite davon angeordnet ist, wobei die Maske (30) einen Verbindungsabschnitt (32) auf einer Außenseite davon aufweist, und ein Empfängerrohr (50) mit dem Verbindungsabschnitt (32) verbunden ist, und
eine Steuereinheit (40), die mit der Abdeckung (31) verbunden ist und einen Griff (41), eine Kontakteinheit (42) und eine Platte (43) aufweist, wobei die Kontakteinheit (42) zwei Platten (421) umfasst, die mit dem Griff (41) zum Pressen oder Freigeben der Platte (43) verbunden sind, die Platte (43) auf einer Oberseite der Abdeckung der Maske (30) ist, ein Bolzen (45) sich durch den Sitz (22) und die Platte (43) erstreckt und am Sitz (22) befestigt ist, und die Klemmeinheit (20) sich durch Betätigen der Steuereinheit (40) zum Festklemmen des Kugelkopfs (10) nach oben und zum Freigeben des Kugelkopfs (10) nach unten bewegt.

2. Klemmvorrichtung nach Anspruch 1, wobei der Bolzen (45) mit einem Knopf (44) verbunden ist, der auf einer Basis (422) aufliegt, die Basis (422) zwischen den beiden Platten (421) der Kontakteinheit (42) angeschlossen ist, und die Klemmeinheit (20) durch Drehen des Knopfs (44) justiert wird.

3. Klemmvorrichtung nach Anspruch 1, wobei die Abdeckung (31) zwei Tragplatten (311) umfasst, jede Tragplatte (311) ein als Drehpunkt dienendes Loch (312) umfasst, und die Kontakteinheit (42) dadurch mit der Abdeckung verbunden ist, dass sich ein Stift durch die als Drehpunkt dienenden Löcher (312) erstreckt, derart dass der Griff (41) in Bezug auf die Abdeckung (31) drehbar ist.

4. Klemmvorrichtung nach Anspruch 1, wobei die Platten (421) jeweils einen vorstehenden Abschnitt (423) aufweisen, der die Platte (43) zusammendrückt.

5. Klemmvorrichtung nach Anspruch 1, wobei die Öffnung (221) des Sitzes (22) eine in Bezug auf eine Oberseite des Sitzes (22) geneigte Innenseite umfasst.

6. Klemmvorrichtung nach Anspruch 1, wobei eine Begrenzungsplatte (23) am Sitz (22) angebracht ist.

7. Klemmvorrichtung nach Anspruch 1, wobei ein Fahrradträger mit dem Empfängerrohr (50) verbunden ist.

8. Klemmvorrichtung nach Anspruch 1, wobei eine Gepäckablage mit dem Empfängerrohr (50) verbunden ist.

9. Klemmvorrichtung nach Anspruch 1, wobei ein Ablagekasten mit dem Empfängerrohr (50) verbunden ist.

10. Klemmvorrichtung nach Anspruch 1, wobei ein Ablagebord mit dem Empfängerrohr (50) verbunden ist.

## Revendications

1. Dispositif de serrage d'une boule d'attelage (10), comprenant :
une unité de serrage (20) ayant trois plaques de serrage (21) situées autour de la boule d'attelage (10), chaque plaque de serrage (21) ayant une partie pivotante (211) sur une extrémité supérieure de celle-ci, les trois plaques de serrage (21) étant reliées de manière pivotante à un siège (22) qui a une ouverture (221) ;
un masque (30) monté sur un extérieur de l'unité de serrage (20) et ayant un couvercle (31) situé sur une partie supérieure de celui-ci, le masque (30) ayant une partie de liaison (32) sur un extérieur de celui-ci, un tube de réception (50) relié à la partie de liaison (32), et
une unité de commande (40) reliée au couvercle (31) et ayant une poignée (41), une unité de contact (42) et un plateau (43), l'unité de contact (42) comprenant deux panneaux (421) qui sont reliés à la poignée (41) de façon à appuyer sur ou libérer le plateau (43), le plateau (43) se trouvant sur une partie supérieure du couvercle du masque (30), un boulon (45) s'étendant à travers le siège (22) et le plateau (43) et fixé au siège (22), l'unité de serrage (20) se déplaçant vers le haut pour serrer la boule d'attelage (10) ou se déplaçant vers le bas pour libérer la boule d'attelage (10) par actionnement de l'unité de commande (40).

2. Dispositif de serrage selon la revendication 1, dans lequel le boulon (45) est relié à un bouton (44) qui repose sur une base (422), la base (422) est reliée entre les deux panneaux (421) de l'unité de contact (42), l'unité de serrage (20) est ajustée par rotation du bouton (44) .

3. Dispositif de serrage selon la revendication 1, dans lequel le couvercle (31) comprend deux plaques de support (311), chaque plaque de support (311) comprend un trou de pivotement (312), l'unité de contact (42) est reliée au couvercle par extension d'un axe à travers les trous de pivotement (312), de telle sorte que la poignée (41) est apte à pivoter par rapport au couvercle (31).

4. Dispositif de serrage selon la revendication 1, dans lequel les panneaux (421) ont chacun une partie en saillie (423) qui appuie sur le plateau (43).

5. Dispositif de serrage selon la revendication 1, dans lequel l'ouverture (221) du siège (22) comprend un intérieur incliné par rapport à une partie supérieure du siège (22).

6. Dispositif de serrage selon la revendication 1, dans lequel une plaque de limitation (23) est montée sur le siège (22).

7. Dispositif de serrage selon la revendication 1, dans lequel un râtelier porte-vélo est relié au tube de réception (50).

8. Dispositif de serrage selon la revendication 1, dans lequel un plateau à bagages est relié au tube de réception (50).

9. Dispositif de serrage selon la revendication 1, dans lequel une boîte de rangement est reliée au tube de réception (50).

10. Dispositif de serrage selon la revendication 1, dans lequel une tablette de placement est reliée au tube de réception (50).
